# EUROPEAN PATENT APPLICATION

(11) **EP 1 980 833 A1**
(43) Date of publication of application: **15.10.2008**
(21) Application number: 07105624.6
(22) Date of filing: 04.04.2007
(51) Int. Cl.: G01M 3/22

(54) **Leak test device**

(71) Applicant: V-Tec Metaalbewerking B.V., 2491 DD 's-Gravenhage (NL); Pols, Kasper P.M., 3311 XR Dordrecht (NL)
(72) Inventor: Pols, Kasper P. M., 3311 XR, Dordrecht (NL)
(74) Representative: van Westenbrugge, Andries

(57) **Abstract**

The invention relates to a leak test apparatus, suitable for placement in-line in a packaging line for forming sealed packages, said apparatus comprising an inlet for said sealed packages, an outlet said for sealed packages, pressure means for providing a pressure difference between the inside of the sealed package and its surrounding, and a detector for detecting hydrogen.

## Description

### Background

The present invention relates to a leak test apparatus for testing sealed packages, and a method for packaging products in sealed packages.

An apparatus for leak testing of food containers is known from US-5.388.466, which discloses a conveyor belt running through a shell. The pressure inside the shell is kept lower than the pressure inside the containers. Sulphur hexafluoride is added as a traces gas to the atmosphere inside the containers, and gas from the interior of the shell is fed to a gas chromatograph for detecting traces of sulphur hexafluoride.

From a environmental point of view, the use of sulphur hexafluoride should be avoided. Furthermore, the apparatus requires a complex shell and an expensive and complex gas chromatograph.

### Summary of the Invention

The invention aims to improve leak testing of sealed packages.

Another object of the invention is to improve the speed of leak testing of sealed packages in production.

Yet another object of the invention is to provide more accurate determination of possible leaks in a package.

Yet another object of the invention is to provide accurate and reliable in-line leak testing of sealed packages.

Yet another object of the invention is to provide an environmentally save, cheaper method and apparatus for leak testing of sealed packages.

According to a first aspect of the invention this is realized with a leak test apparatus, suitable for placement in-line in a packaging line for forming sealed packages, said apparatus comprising an inlet for said sealed packages, an outlet said for sealed packages, pressure means for providing a pressure difference between the inside of the sealed package and its surrounding, and a detector for detecting hydrogen.

The invention furthermore provides a method for packaging products in sealed packages filled with a protective atmosphere gas, wherein a gas mixture comprising nitrogen and hydrogen is added to said protective atmosphere gas, said sealed packages are supplied to a leak test apparatus comprising a detector for detecting hydrogen, a pressure difference is effected between the interior and the exterior of said sealed packages, the pressure inside said sealed packages being higher than outside said sealed packages, and an amount of gas from the surrounding of said sealed packages is fed to a detector for detecting hydrogen.

This provides the possibility of in-line testing of sealed packages at production speed and in a reliable way.

The apparatus of the invention can be used for testing all kinds of sealed packages which need to be leak free or substantially leak free. Examples of such packages are food packages in which food products are placed in for instance deep-drawn containers and provided with a protective atmosphere. Usually, the packaging line is placed in a production line. In another embodiment, the sealed package can also be a sealed foil, for instance a sealed plastic foil, like a foil tube sealed at both ends.

Another example of products which can be provided in a sealed package are medical equipment, medicaments and articles used operating rooms, for instance.

A protective atmosphere which can be used for packaging products is for instance a protective atmosphere which has a low oxygen level, or substantially no oxygen at all.

An example of gases used to provide such a protective atmosphere are carbon dioxide, nitrogen, and mixtures of these gases. In this way, products or articles or protected from atmospheric oxygen.

As a detector suited in the apparatus of the current invention, a solid state hydrogen detector can be used. These detectors as such are well known to a man skilled in the art. In particular, in an embodiment, a hydrogen detector is used which works on the principles of microelectronic technology. This could be in the form of a microelectronics chip mounted in a sensor housing. In a particular embodiment, the sensor comprises an integrated circuit having a MOS-FET amplifier. Instead of the usual input, it has a this film of metal hydride which is permeable to hydrogen atoms only. The operation of such a sensor, non-limiting, is as follows. Hydrogen molecules impacting on the metal film ionise and are selectively absorbed by it. This gives rise to a small voltage peak which in amplified and detected. The sensor uses a temperature readout of the detector chip and calculates the hydrogen concentration, using signal processing to compensate for background, drift, and temperature changes. The sensor is capable of detecting hydrogen levels a little above the atmospheric background level of 0.5 ppm. In an embodiment of the invention, the detecting speed is less than 1 second. In particular, the apparatus is capable of running at a speed of more than 100 sealed packages per minute, in particular more than 120.

In an embodiment of the invention, hydrogen is added to a sealed package. The hydrogen is for instance added as a tracer gas to a protective atmosphere. In an embodiment, hydrogen is provided in a mixture with an inert gas, for instance nitrogen. A well known gas mixture for providing hydrogen is a gas mixture of 5 % hydrogen and 95 % nitrogen. In such a gas mixture, hydrogen does not bum or ignite.

In an embodiment, the pressure means is adapted for applying mechanical pressure to said sealed packages.

In an embodiment, the leak test apparatus according to the invention comprising a transport device for transporting said sealed packages from said inlet to said outlet, and a pressure means installed above said transport device.

In an embodiment, the transport device comprises a conveyor belt, and said pressure means comprises pressing device mounted above said transport conveyor belt for applying pressure to said sealed packages.

In an embodiment, the transport device comprises a transport conveyor belt, and said pressure means comprises a second conveyor belt mounted above said transport conveyor belt for applying pressure to said sealed packages. In this way, a very simple, cheap and swift way of applying physical pressure to an object is provided. Furthermore, the amount of pressure can be set in a very simple manner by changing the spacing between the belts.

In an embodiment, the transport device comprises a transport conveyor belt, and said pressure means comprises a second conveyor belt mounted above and parallel to said transport conveyor belt with a spacing between the belts which is adapted to the size of said sealed packages for applying pressure to said sealed packages. It is even possible to change the orientation between the surfaces of the belts, for instance making the distance smaller in the transport direction of the belts.

The invention further relates to a packaging line for packaging food products in sealed packages filled with a protective atmosphere, said packaging line comprising a leak test apparatus according to the invention and a packaging apparatus having a gas supplying device for supplying protective atmosphere gas to said packages, said gas supplying device comprising a source of a gas mixture comprising hydrogen

In an embodiment of the method of the invention, the pressure difference is effected by applying physical pressure to said sealed packages.

In an embodiment, the sealed packages are supplied to a leak test apparatus according to the invention.

The various aspects discussed in this patent can be combined in order to provide additional advantageous advantages.

### Description of the Drawings

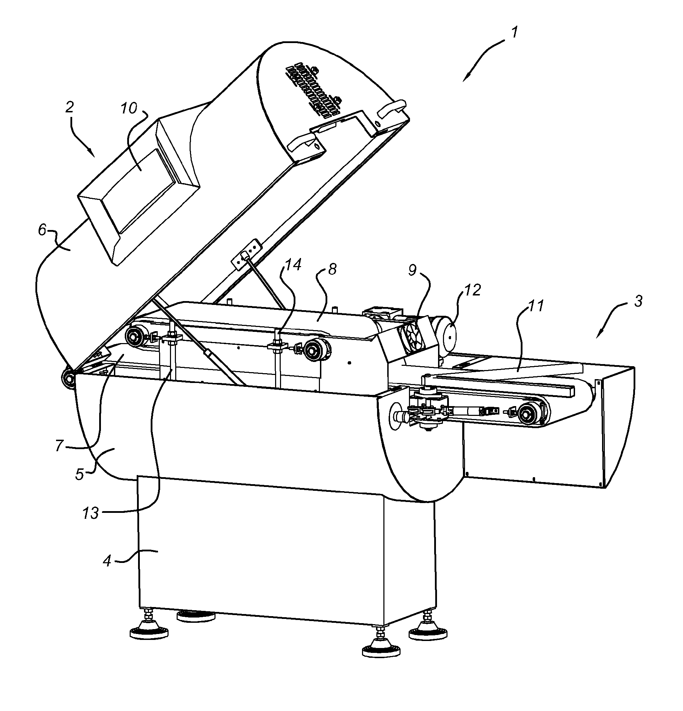

The invention will be further elucidated referring to an embodiment of a leak test apparatus shown in the figure.

### Detailed Description of Embodiments

In the figure, a leak test apparatus 1 according to the present invention is shown.

The leak test apparatus 1 has an inlet 2 and an outlet 3. At the inlet side 2, a sealed package enters the apparatus, and at the outlet side 3 the sealed packages exit the apparatus. The apparatus further has a support frame 4, in which control and drive electronics can be placed. On the support frame 4, a compartment is mounted with a lower shell 5 and an upper shell 6, which are in this embodiment hingedly connected at the input side and which can be opened to provide access to the interior.

In the interior of the upper and lower shells 5, 6, a frame is provided onto which in this embodiment a conveyor belt 7 is installed. This conveyor belt 7 is suited for transporting sealed packages from the inlet 2 to the outlet 3.

Above the conveyor belt 7, a further conveyor belt 8 is placed, parallel to the conveyor belt 7. The conveyor belts 7 and 8 are parallel to one another.

The apparatus 1 further has an air suction unit 9, comprising for instance a ventilator, for providing a flow of air from between both conveyor belts 7, 8 to the outlet 3. The air suction unit 9 provides a flow of air, which enters the apparatus at the inlet 2, and which flows over the sealed packages on the conveyor 7. At the exit side of the air suction unit 9, or just before or after the ventilator, an inlet may be provide for a probe which directs air from the air suction unit 9 to a hydrogen detector 10. The hydrogen detector 10 in this embodiment is located at the indicated position in the upper shell 6 of the apparatus 1.

The apparatus 1 furthermore has a selection device 11, which is capable of blocking the exit or outlet 3 of the apparatus in such a way that sealed packages will fall of the conveyor belt at the side. It is of course possible to install an other kind of selection device, known to the man skilled in the art, for directing packages away from exit or outlet 3 of apparatus 1.

The apparatus 1 furthermore has a driving device, here an electromotor 12, which drives the upper conveyor belt 8. The upper conveyor belt 8 furthermore has adjustment means 13, 14, which make it possible to adjust the mutual distance of conveyor belt 8 and conveyor belt 7. In this embodiment, conveyor belt 8 is mounted on a frame via rods 13 and 14, which are provided with a thread, which make it possible to adjust height of the conveyor belt 8. Using these threaded rods, it is possible to adjust the entire position of conveyor belt 8 with respect to conveyor belt 7. In an embodiment, the distance between conveyor belt 8 and 7 at the inlet 2 will be larger than the distance near the outlet 3. In this way a sealed package will enter between the two conveyor belts and while travelling towards the outlet 3, it will be pressed more and more tightly between both conveyor belts. In this way, if a leak in the packages is present, a small amount of the gas of the protective atmosphere of the sealed package, which contains hydrogen, will be pressed out of the sealed package and will be taken along with a flow of air through the air duct 9 towards the hydrogen detector 10.

A suitable hydrogen detector for use in an apparatus of the invention is for instance the H2000 hydrogen detector from Sensistor Technologies AB, Sweden. It is capable of detecting leaks as small as 5x10^-7 mbarl/s (when a gas mixture comprising 5% hydrogen is used). In an embodiment, a suitable detector is be suitable of detecting levels above 0.5 ppm hydrogen.

A gas mixture having 5 % hydrogen and 95 % nitrogen can be used as a tracer gas in a sealed package. This particular gas mixture is non-flammable (ISO 10156) and is allowed for use in contact with food products.

It will also be obvious after the above description and drawings are included to illustrate some embodiments of the invention, and not to limit the scope of protection.

Starting from this disclosure, many more embodiments will be evident to a skilled person which are within the scope of protection and the essence of this invention and which are obvious combinations of prior art techniques and the disclosure of this patent.

## Claims

1. Leak test apparatus, suitable for placement in-line in a packaging line for forming sealed packages, said apparatus comprising an inlet for said sealed packages, an outlet said for sealed packages, pressure means for providing a pressure difference between the inside of the sealed package and its surrounding, and a detector for detecting hydrogen.

2. Leak test apparatus according to claim 1, wherein said pressure means is adapted for applying mechanical pressure to said sealed packages.

3. Leak test apparatus according to claim 1 or 2, comprising a transport device for transporting said sealed packages from said inlet to said outlet, and a pressure means installed above said transport device.

4. Leak test apparatus according to one of the preceding claims, wherein said transport device comprises a conveyor belt, and said pressure means comprises pressing device mounted above said transport conveyor belt for applying pressure to said sealed packages.

5. Leak test apparatus according to one of the preceding claims, wherein said transport device comprises a transport conveyor belt, and said pressure means comprises a second conveyor belt mounted above said transport conveyor belt for applying pressure to said sealed packages.

6. Leak test apparatus according to one of the preceding claims, wherein said transport device comprises a transport conveyor belt, and said pressure means comprises a second conveyor belt mounted above and parallel to said transport conveyor belt with a spacing between the belts which is adapted to the size of said sealed packages for applying pressure to said sealed packages.

7. Packaging line for packaging food products in sealed packages filled with a protective atmosphere, said packaging line comprising a leak test apparatus according to any one of the preceding claims and a packaging apparatus having a gas supplying device for supplying protective atmosphere gas to said packages, said gas supplying device comprising a source of a gas mixture comprising hydrogen.

8. Method for packaging products, preferably food products, in sealed packages filled with a protective atmosphere gas, wherein a gas mixture comprising nitrogen and hydrogen is added to said protective atmosphere gas, said sealed packages are supplied to a leak test apparatus comprising a detector for detecting hydrogen, a pressure difference is effected between the interior and the exterior of said sealed packages, the pressure inside said sealed packages being higher than outside said sealed packages, and an amount of gas from the surrounding of said sealed packages is fed to a detector for detecting hydrogen.

9. Method of claim 8, wherein said pressure difference is effected by applying physical pressure to said sealed packages.

10. Method of claims 8-9, wherein said sealed packages are supplied to a leak test apparatus according to any one of the preceding claims.

11. Apparatus comprising one or more of the characterising features described in the description and/or shown in the attached drawings.

12. Method comprising one or more of the characterising features described in the description and/or shown in the attached drawings.
